# EUROPEAN PATENT APPLICATION

(11) **EP 2 610 785 A1**
(43) Date of publication of application: **03.07.2013**
(21) Application number: 11306787.0
(22) Date of filing: 27.12.2011
(51) Int. Cl.: G06K 19/07

(54) **Near field communication method between a tag and a reader powering the tag**

(71) Applicant: ST-Ericsson SA, 1228 Plan-les-Ouates (CH)
(72) Inventor: Tudose, Andrei, 06740 Châteauneuf (FR); Dhayni, Achraf, 06200 Nice (FR)
(74) Representative: Hirsch & Associés

(57) **Abstract**

A Near Field Communication method is disclosed, using inductive coupling between a tag (3) and a reader (1) to power said tag (3) by said reader (1) wherein the difference between the resonance frequencies of respectively said tag (3) and said reader (1) can be increased when distance between said tag (3) and said reader (1) is reduced

## Description

### FIELD OF THE INVENTION

The invention relates to a Near Field Communication method between a tag and a reader powering the tag.

### BACKGROUND OF THE INVENTION

Radio Frequency Identification (RFID) is a technology that provides wireless identification and tracking capability. A RFID system can read and process the data from a mobile device called tag by using an RFID reader. The data transmitted by the tag may provide the information about identification or location, or specific information about the product tagged. Typically, a passive RFID system can detect tags within a distance of less than 1 meter for near-field configurations and up to 10meters for far-field configurations. Near Field is close range reading of RFID tags, up to for example 1 meter. Near-Field Communication (NFC) is a short-range High Frequency wireless communication technology that enables the exchange of data between devices at a distance of up to 20cm. This technology is an extension of the ISO 14443 proximity-card standard that combines the interface of a smartcard and a reader into a single device.

NFC systems typically include one reader and one or more tags. Tags can be active or passive. When the tag is active, it is powered by its own internal supply power such as a battery, the internal supply power for the operating circuitry. When the tag is passive, the tag is dependant on the reader for the tag power. The reader transmits excitation signals into the space surrounding the reader. The resonant circuits of both the reader and the tag cooperate. The communication is initiated when the reader and the tag are brought together. The tag action consists of generating and transmitting the response to the reader. The response is in the form of a magnetic field modulation. The response is modulated by the tag so as to incorporate in the response encoded information data.

The data transfer between a tag and a reader works as following: when a tag is placed within the alternating magnetic field created by the reader, it draws energy from the magnetic field. The periodic switching on and off of a load impedance at the tag therefore effects impedance changes at the reader antenna and thus has the effect of an amplitude/phase modulation of the reader antenna voltage by the remote tag. If the switching on and off of the load impedance is controlled by the tag stored data stream, then this data stream is transferred from the tag to the reader. This type of data transfer is called load modulation. The process of load modulation creates amplitude modulated sidebands symmetrically placed around the 13.56 MHz interrogation carrier frequency. Inductive coupling means that the tag antenna and the reader antenna are coupled by the magnetic field through both tag antenna coil and reader antenna coil. All the energy used in the tag is extracted from the coil of the reader antenna.

The reader has a power supply which conducts a current to the reader resonant circuit causing the reader antenna to produce an excitation signal in the form of an electromagnetic field. The excitation signal couples to the tag antenna through mutual inductance and powers the tag circuitry. The tag antenna produces a response signal which couples to the reader antenna through mutual inductance in the same way as for the excitation signal. The tag modulates the response signal with the information data stored in its memory. To couple implies to electronically connect two circuits so that signal will pass from one to the other.

Inductive coupling systems are either proximity or vicinity systems. Proximity cards are used in the up to 10cm range, for example for use with a selling machine, shop checkout, public transport system, and vicinity cards are used for a distance up to 1m, although it rarely reliably exceeds 0.8m.

The range of the reader is affected by the strength of the electromagnetic field generated by its resonant circuit. The range of the reader is the practical maximal distance to which it can be efficiently coupled with a passive tag. The range of the reader can be altered by the environment in which the reader resides. For example, the materials like metals can detune the resonant circuit of the reader from predetermined frequency and reduce the reader range.

The presence in the reader field of several tags with variations in their resonant circuits can also detune the resonant circuit of the reader. Another cause of the detuning of the reader can be a too strong coupling with the tag antenna.

A passive tag is a tag without any own power source. When radio waves from the reader reach the tag antenna, the energy is converted by the tag antenna into electricity that can power up the microchip in the tag. The tag is able to send back information stored on the chip. The signal transmitted by NFC readers and tags is transmitted at a certain power level, measured in watts. High power levels also increase the risk of interference with other radio sensitive equipment. Regulation imposes limitations on power levels to safeguard people health and prevent interferences. Magnetic induction systems shall respect these rules. In magnetic induction, the power decreases more quickly than for radio frequencies. Magnetic induction power decreases as the cube of the distance and not as the square of the distance. Therefore, power levels of magnetic fields can be higher, because they are important only over a very short distance.

The reader antenna and the tag antenna are devices that can convert an electrical signal into a radiated electromagnetic wave when performing a transmitting function and that can convert a radiated electromagnetic wave into an electrical signal when performing a receiving function.

In a first prior art, for example the patent application US7868764, it is disclosed a tag comprising a tuneable antenna resonant circuit. However, this tuneable antenna circuit is used to match exactly the resonance frequencies of the tag and the reader, when a detuning has happened. This is done to increase the power transfer from the reader to the tag.

In a second prior art, for example the patent application US7132946, it is disclosed a RFID tag that dynamically varies resonance frequency to reduce or to eliminate the potential effects of electromagnetic tag to tag coupling. This second prior does not deal with tag to reader coupling. Besides, this second prior art aims at compensating for an existing resonance frequency shift in the tag.

In a third prior art, for example the patent application US4924171, when there is a change in the coupling distance between the reader and the tag, firstly the tag sends a message to the reader, and secondly the reader adapts accordingly the level of magnetic field radiated towards the tag.

Usually, the best power transfer between reader and tag is theoretically performed when the two antennas are equipped with resonant circuits resonating at 13.56MHz. This way, the maximum energy can be converted from the incoming field into electric energy for the tag chip. But in practice, when the reader and tag antennas resonant circuits are resonating at 13.56MHz, and when the reader and the tag are brought together, due to the induced strong magnetic coupling, the reader circuit resonance frequency will be shifted to another frequency. The efficiency is consequently reduced. Indeed, the reader output power will degrade and possibly lead to the loss of link between the reader and the tag.

In a fourth prior art, in order to prevent this power generation degradation, tag antennas circuits are equipped with front-ends resonating at slightly higher frequencies, for example at 16 or at 17 MHz. Then, power generation degradation is avoided when the two devices are brought together. However, the capability of extracting power by the tag antenna from the incoming field will be reduced.

Therefore, when the tag moves away from the reader, the tag can no more extract sufficient power from the magnetic field generated by the reader.

In a fifth prior art, in order to overcome the detuning or the link degradation between reader and tag, the reader is provided with an adjustable tuning capability for its resonant circuit in response to variations in its environment. This leads to a reader with uniform level of performance within variations in operating environments, which means in response to detuning. The adjustable tuning capability is made of a capacitance tuning circuit. In this fifth prior art, there are many requests and feedbacks exchanged between reader and tag.

### SUMMARY

The object of embodiments of the invention is to alleviate at least partly the above mentioned drawbacks.

More particularly, embodiments of the invention aim at providing a NFC method which can give NFC tags the ability to optimize the management of the power supply provided by readers.

According to some embodiments of the invention, in order to overcome the detuning or the link degradation between reader and tag, there is no dialog between reader and tag for the purpose of avoiding the link degradation between reader and tag. In that context, there is on the tag side a permanent process of collecting the information of information representative of the distance between the tag antenna and the reader antenna, and applying the mechanism of changing the resonance frequency at the tag level.

One object may be achieved with a Near Field Communication method, using inductive coupling between a tag and a reader to power said tag by said reader wherein the difference between the resonance frequencies of respectively said tag and said reader can be increased when distance between said tag and said reader is reduced.

Another object may be achieved with a Near Field Communication method, using inductive coupling between a tag and a reader to transfer energy from said reader to said tag, at a reader resonance frequency, for power alimentation of said tag wherein a resonance frequency of said tag can be shifted away from 13.56MHz when said tag is brought closer to said reader and said tag resonance frequency can be shifted closer to 13.56MHz when said tag is moved away from said reader.

Preferred embodiments comprise one or more of the following features:
- the reader resonance frequency is in the vicinity of 13.56MHZ.
- said energy transfer from said reader to said tag is the sole power alimentation of said tag.
- said tag resonance frequency is shifted according to the power level provided by a Field Power Supply unit of said tag, said Field Power Supply unit being able to provide power alimentation to said tag from electrical power extracted by an antenna of said tag, said power level variations being representative of variations of said distance between said reader and said tag.
- a resonance frequency of said tag is shifted away from 13.56MHz by increasing said tag resonance frequency.
- a resonance frequency of said tag is shifted away from 13.56MHz by decreasing said tag resonance frequency.
- said tag resonance frequency is shifted away from 13.56MHz by an amount in the range of 0.5-10MHz.
- said tag resonance frequency is shifted away from 13.56Mhz by an amount in the range of 2-6MHz.
- variations of distance between said tag and said reader are less than 5cm.
- an area of an antenna of said reader is less than 5cm2.

Still another object may be achieved with a Near Field Communication tag, adapted to use inductive coupling with a reader in order to be powered by said reader wherein it comprises an integrated circuit adapted to shift a tag resonance frequency in order to increase the difference between resonance frequencies of respectively said tag and said powering reader when distance between said tag and said powering reader is reduced.

Still another object may be achieved with a Near Field Communication tag, adapted to use inductive coupling with a reader to transfer energy from said reader to said tag, at a reader resonance frequency, in order to be powered by said reader wherein it comprises an integrated circuit adapted to shift a tag resonance frequency away from said reader resonance frequency when said tag is brought closer to said reader and to shift said tag resonance frequency closer to said reader resonance frequency when said tag is moved away from said reader.

Preferred embodiments comprise one or more of the following features:
- the tag further comprises a Field Power Supply unit adapted to provide power alimentation to said tag from electrical power extracted by an antenna of said tag, and wherein said integrated circuit is adapted to shift a tag resonance frequency according to the power level provided by said Field power Supply Unit, said power level variations being representative of variations of said distance between said reader and said tag.
- said integrated circuit is adapted to shift said tag resonance frequency away from or closer to 13.56Mhz, according to variations of said distance between said reader and said tag.

### BRIEF DESCRIPTION OF THE DRAWINGS

Fig. 1 shows an example of the input output flows exchanged in a near field communication method according to some embodiments of the invention.
Fig. 2 shows an example of functional blocks of a tag according to some embodiments of the invention.

### DETAILED DESCRIPTION

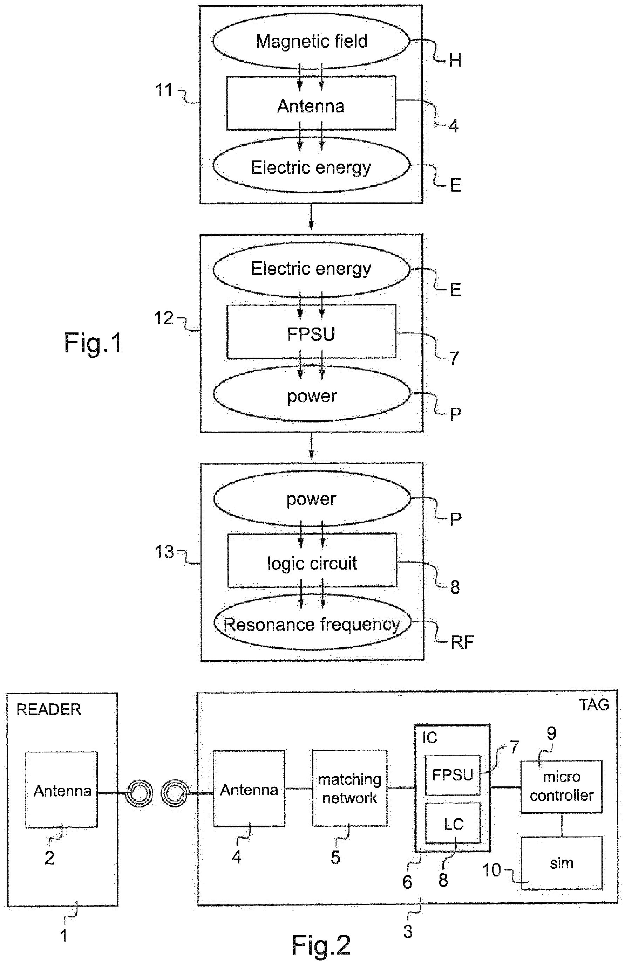

Fig. 1 shows an example of the input output flows exchanged in a near field communication method according to some embodiments of the invention. The cycle of management of the tag antenna resonance frequency is described.

The near field communication method comprises, at the tag level, a step 11 of converting magnetic field into electrical energy, a step 12 of converting electrical energy into power alimentation for the tag, a step 13 of controlling tag resonance frequency according to power alimentation level.

In the step 11, the antenna 4 receives the magnetic field H generated by the reader and converts it into electric energy E.

In the step 12, the Field Power Supply unit 7 collects the electric energy E from the antenna 4. The Field Power Supply Unit 7 generates a power P corresponding to the amount of collected electrical energy E.

First, the level of this energy informs on the distance between the tag antenna and the reader antenna, secondly this level of energy is a signal input for generating a power P in the following step.

In the step 13, the mechanism of changing the resonance frequency RF by the logic circuit 8 is based on the level of power P being generated by the Field Power Supply Unit 7. So, the logic circuit 8 senses the amount of power P furnished by the Field Power Supply Unit 7. A lower level of power P is representative of a bigger distance between the reader and the tag, whereas a higher level of power P is representative of a smaller distance between the reader and the tag.

If the level of this power P is low, the resonance frequency RF is brought at 13.56MHz or close to 13.56MHz. The lower the level of sensed power P is, the closer to 13.56MHz the resonance frequency RF is brought. If the level of this power P is high, the resonance frequency RF is shift away from 13.56MHz. The higher the level of sensed power is, the further away from 13.56MHz the resonance frequency RF is shifted away.

For the low frequency and high frequency RFID systems using inductive coupling, the range of the reader is small, for example 0.2cm to 80cm. The NFC tag needs to receive enough power to activate itself, and to retrieve data from a nonvolatile memory and to perform a tuning procedure in order to match its resonance frequency to the reader resonance frequency. In order to perform such a trim or tuning procedure, the tag operating unit, usually embodied as an integrated circuit, has to be activated. This activation is not possible at a too long given communication distance as long as the tag antenna resonant circuit resonance frequency is detuned from the reader frequency.

For example, the reader resonance frequency is 13.56MHZ. NFC actually uses ISO 14443 which is an international standard for contact-less smart cards operating at 13.56 MHz in proximity to a reader antenna with a read range distance of up to 10 cm.

An advantage of embodiments of the invention is that there is no degradation in the communication when the tag is very close to the reader and the capability of the reader to power the tag is maintained when the reader and the tag are relatively far from each other.

Since passive tags do not have an internal power supply, the electrical power required to activate the tag integrated circuit has to be entirely drawn from the reader field. In the energy transmission, passive tags without their own power supplies, can draw, from the magnetic field generated by the reader, the energy required for reading the memory, for operating their own processor and memory systems, and for modulating the generated magnetic field. This requires a sufficiently large magnetic field that must be built up by the reader. In turn, this requires antennas with a sufficient dimension. The method described here is especially beneficial in the situation when the energy transfer from the reader to the tag is the sole power alimentation of the tag, as in this situation more energy is collected from the magnetic field generated by the reader not only for the tag data modulation and transmission, but also for the tag chip power alimentation.

Fig. 2 shows an example of functional blocks of a tag according to some embodiments of the invention. The reader 1 and the tag 3 are in front of each other. In the reader 1 part, only the reader antenna 2 is represented.

The tag 3 comprises a tag antenna 4, a matching network 5, an integrated circuit (IC) 6, a microcontroller 9 and a SIM (Subscriber Identity Module) card 10. The integrated circuit 6 comprises a Field Power Supply unit FPSU 7 and a Logic circuit 8.

In the tag 3, the matching network 5 is connected between the antenna 4 and the integrated circuit 6. The integrated circuit 6 is connected between the matching network 5 and the microcontroller 9. The microcontroller 9 is connected between the integrated circuit 6 and the SIM card 10.

The matching network 5 is used to match the input impedance of the tag with the antenna, so that the maximum power can be transferred from the antenna 4 to the integrated circuit 6. In fact, the matching network 5 and the integrated circuit 6 are components of the front end of the tag 3. The front end consists of all the components that process, in the tag 3, the signal at the original incoming radio frequency, before it is converted to a lower intermediate frequency. The front end is responsible for bidirectional interfacing between the antenna and other functional blocks of the tag 3. In the front end, energy and data are extracted from the input signal and sent to power supply, and data processing circuitry. The front end includes interface circuitry which provides the capability of transforming the magnetic field energy for powering purposes in passive tag and triggering of the tag response. The tag resonance frequency is indeed the tag front end resonance frequency. The reader resonance frequency is indeed the reader front end resonance frequency.

Preferably, the tag comprises an integrated circuit 6 adapted to shift tag 3 resonance frequency in order to increase the difference between resonance frequencies of respectively the tag 3 and the powering reader 1 when distance between the tag 3 and the powering reader 1 is reduced. In this embodiment, there is prevention of degradation of the reader output power and also the potential damage of the tag 3 circuit is avoided by limiting the amount of power harvested by the tag. In embodiments of the present invention, there is no reader solicitation, because everything is done at tag level.

Here, the integrated circuit 6 is adapted to shift the tag 3 resonance frequency away from the 13.56MHz frequency when the tag 3 is brought closer to the reader 1 and to shift the tag 3 resonance frequency closer to 13.56MHz resonance frequency when the tag 3 is moved away from the reader 1. This leads to a uniform level of performance despite substantial variations in operating environments for the reader 1. With this solution, the reader needs no more coping with the management of link degradation. The tuning is made before the reader and the tag start exchanging information.

For example, the integrated circuit 6 is adapted to shift the tag 3 resonance frequency away from or closer to 13.56 MHz, according to variations of the distance between the reader 1 and the tag 3. More precisely, the tag 3 resonance frequency is shifted by the logic circuit 8. The logic circuit 8 shifts the tag 3 resonance frequency with respect to the power alimentation level generated by the Field Power Supply Unit 7 which is representative of the coupling distance between tag 3 and reader 1. The reading range of a 13.56 MHz NFC system is around 3cm with passive tags. By using the present NFC method, this reading range can be increased.

The tag 3 receives the power through the coil antenna 4 when placed in the magnetic field generated by the reader 1. When the tag 3 is placed in close proximity to the reader 1, the tag 3 can receive so much power that the voltage on the tag 3 chip must be limited so as not to damage the chip. Usually, this is accomplished by placing a direct current regulator on the chip. With this proposed NFC method, the tag 3 increases its capability of extracting power from the incoming electro-magnetic field.

In particular, the integrated circuit 6 of the tag 3 according to embodiments of the invention further comprises a Field Power Supply Unit 7 adapted to provide power alimentation to the tag 3 from electrical power extracted by tag antenna 4. The integrated circuit 6 is adapted to shift the tag 3 resonance frequency according to the power level provided by the Field Power Supply Unit 7, the power level variations being representative of variations of the distance between the reader 1 and the tag 3. The signal sent by the Field Power Supply Unit 7 to the logic unit 8 has a level which is related to the distance between the reader and tag. If this distance decreases, the signal level increases; if this distance increases, the signal level of the Field Power Supply Unit 7 decreases.

Actually, the tag resonance frequency is shifted with respect to the power level provided by the Field Power Supply Unit 7 of the tag 3. The Field Power Supply Unit 7 is able to provide power alimentation to the tag 3 from electrical power extracted by antenna 4 of the tag 3. The power alimentation level variations are representative of variations of the distance between the reader 1 and the tag 3.

For example, a resonance frequency of the tag 3 is shifted away from the 13.56MHz frequency by increasing the tag 3 resonance frequency. But the resonance frequency of the tag 3 can also be shifted away from the 13.56MHz frequency by decreasing the tag 3 resonance frequency. Here, the tag 3 resonance frequency is shifted away from the 13.56MHz frequency by an amount in the range of 2-8MHz. Preferably, the tag 3 resonance frequency can be shifted away from the 13.56MHz frequency by an amount in the range of 3-5MHz.

The size of a tag antenna has a significant effect on the tag read range. The necessity to save space and to go further in the miniaturisation implies the use of smaller antennas. In general, the smaller the tag antenna is, the lower the coupling coefficient is between a reader and a tag, but by using the method according to embodiments of the invention, at least some drawbacks of small antennas can be compensated for. With the NFC method, the use of smaller antennas is made possible while preserving the operating distance between two NFC devices.

The tag according to Fig.2 may be used to perform the NFC method described in Fig.1.

The invention has been described with reference to preferred embodiments. However, many variations are possible within the scope of the invention.

## Claims

1. A Near Field Communication method, using inductive coupling between a tag (3) and a reader (1) to power said tag (3) by said reader (1) wherein the difference between the resonance frequencies of respectively said tag (3) and said reader (1) can be increased when distance between said tag (3) and said reader (1) is reduced.

2. A Near Field Communication method, using inductive coupling between a tag (3) and a reader (1) to transfer energy from said reader (1) to said tag, at a reader resonance frequency, for power alimentation of said tag (3) wherein a resonance frequency (RF) of said tag (3) can be shifted away from 13.56MHz when said tag (3) is brought closer to said reader (1) and said tag resonance frequency (RF) can be shifted closer to 13.56MHz when said tag (3) is moved away from said reader (1).

3. A Near Field Communication method according to claim 1 or 2 wherein the reader resonance frequency is in the vicinity of 13.56MHZ.

4. A Near Field Communication method according to any of the precedent claims wherein said energy transfer from said reader (1) to said tag (3) is the sole power alimentation of said tag (3).

5. A Near Field Communication method according to any of the precedent claims wherein said tag resonance frequency (RF) is shifted according to the power (P) level provided by a Field Power Supply unit (7) of said tag (3), said Field Power Supply unit (7) being able to provide power alimentation to said tag (3) from electrical power extracted by an antenna (4) of said tag (3), said power (P) level variations being representative of variations of said distance between said reader (1) and said tag (3).

6. A Near Field Communication method according to any of the claims 1 to 5 wherein a resonance frequency (RF) of said tag (3) is shifted away from 13.56MHz by increasing said tag resonance frequency (RF).

7. A Near Field Communication method according to any of the claims 1 to 5 wherein a resonance frequency (RF) of said tag (3) is shifted away from 13.56MHz by decreasing said tag resonance frequency (RF).

8. A Near Field Communication method according to claim 6 or 7 wherein said tag resonance frequency (RF) is shifted away from 13.56MHz by an amount in the range of 0.5-10MHz.

9. A Near Field Communication method according to claim 8 wherein said tag resonance frequency (RF) is shifted away from 13.56Mhz by an amount in the range of 2-6MHz.

10. A Near Field Communication method according to any of the precedent claims wherein variations of distance between said tag (3) and said reader (1) are less than 5cm.

11. A Near Field Communication method according to any of the precedent claims wherein an area of an antenna (2) of said reader (1) is less than 5cm2.

12. A Near Field Communication tag (3), adapted to use inductive coupling with a reader (1) in order to be powered by said reader (1) wherein it comprises an integrated circuit (6) adapted to shift a tag resonance frequency (RF) in order to increase the difference between resonance frequencies of respectively said tag (3) and said powering reader (1) when distance between said tag (3) and said powering reader (1) is reduced.

13. A Near Field Communication tag (3), adapted to use inductive coupling with a reader (1) to transfer energy from said reader (1) to said tag (3), at a reader resonance frequency, in order to be powered by said reader (1) wherein it comprises an integrated circuit (6) adapted to shift a tag resonance frequency (RF) away from said reader resonance frequency when said tag (3) is brought closer to said reader (1) and to shift said tag resonance frequency (RF) closer to said reader resonance frequency when said tag (3) is moved away from said reader (1).

14. A Near Field Communication tag (3) according to claims 12 or 13 wherein the tag (3) further comprises a Field Power Supply unit (7) adapted to provide power alimentation to said tag (3) from electrical power extracted by an antenna (4) of said tag (3), and wherein said integrated circuit (6) is adapted to shift a tag resonance frequency (RF) according to the power (P) level provided by said Field power Supply Unit (7), said power (P) level variations being representative of variations of said distance between said reader (1) and said tag (3).

15. A Near Field Communication tag (3) according to claims 12 to 14 wherein said integrated circuit (6) is adapted to shift said tag resonance frequency (RF) away from or closer to 13.56Mhz, according to variations of said distance between said reader (1) and said tag (3).
